# EUROPEAN PATENT SPECIFICATION

(11) **EP 2 527 190 B1**
(45) Date of publication and mention of the grant of the patent: **07.06.2017**
(21) Application number: 10843994.4
(22) Date of filing: 27.12.2010
(51) Int. Cl.: B60L 15/20, B60T 8/175

(54) **ELECTRICALLY DRIVEN VEHICLE**
ELEKTRISCH BETRIEBENES FAHRZEUG
VÉHICULE ÉLECTRIQUE

(30) Priority: 22.01.2010 JP 2010012335
(43) Date of publication of application: 28.11.2012
(73) Proprietor: Hitachi Construction Machinery Co., Ltd., Taito-ku Tokyo 110-0015 (JP)
(72) Inventor: KIKUCHI, Akira, Hitachi-shi Ibaraki 319-1292 (JP); YASUDA, Tomohiko, Tsuchiura-shi Ibaraki 300-0013 (JP); SATO, Takayuki, Tsuchiura-shi Ibaraki 300-0013 (JP); NAKAJIMA, Kichio, Tokyo 100-8220, (JP)
(74) Representative: Beetz & Partner mbB
(86) International application number: PCT/JP2010/073610
(87) International publication number: WO 2011/089830

(56) References cited:
- EP-A1- 1 905 637
- JP-A- 7 112 634
- JP-A- 2005 047 326
- US-A- 5 419 624

## Description

### Technical Field

The present invention relates generally to electrically driven vehicles that each travel by having drive wheels driven by electric motors. More particularly, the invention relates to an electrically driven vehicle, such as a dump truck, having a slip control device to control and prevent slipping of drive wheels.

### Background Art

In vehicles that are traveling along frozen, compacted snow-covered, or other slick road surfaces, when a driver steps on an accelerator pedal in an attempt to speed up the vehicle, an abrupt increase in drive wheel speed may cause the drive wheels to spin. This event is hereinafter referred to as slipping. The occurrence of such drive wheel slipping renders the behavior of the vehicle unstable, resulting in a loss of steering wheel control and hence in difficulty with stable traveling. Accordingly it is necessary to suppress the occurrence of drive wheel slipping, and to this end, it is important how to detect such slipping more accurately.

Conventional schemes for detecting the occurrence of drive wheel slipping in a vehicle include those described in Patent Document 1, for example. In one of these known detection schemes, after a drive wheel and a driven wheel have had respective wheel speeds detected, a slip ratio of the drive wheel is computed and if the slip ratio is in excess of a predefined value, it is detected that the drive wheel is slipping. In another such known detection scheme, after drive wheels and driven wheels have had respective wheel speeds detected, any differences between the drive wheel speeds and the driven wheel speeds are computed and if the differences in speed are in excess of a predefined value, it is detected that the drive wheels are slipping.

The wheel speeds of the drive wheels and those of the driven wheels, however, cannot always be detected and are often difficult to detect. For example, since speed sensors of a general electromagnetic pickup scheme generate substantially no sensor output signals in low-speed regions, speed detection in these low-speed regions is impossible. In addition, although speed sensors of a semiconductor scheme using Hall ICs generate sensor output signals in low-speed regions, a significant delay in the detection of low wheel speeds causes a speed detection error in the low-speed regions. The mis-detection of drive wheel slipping in those low-speed regions is therefore likely in both schemes. In general, if drive wheel slipping occurs, the slipping event can be suppressed by controlling a driving torque of the drive wheel(s). The occurrence of such a slip detection error, however, poses problems in that despite the fact that drive wheel slipping is actually occurring, the suppression of slipping is not started and the slip state persists, or conversely in that even if drive wheel slipping is not occurring, the suppression of slipping is started and the driving torque of the drive wheel(s) is unnecessarily controlled. Acceleration performance of the vehicle consequently deteriorates in both cases.

For these reasons, a scheme intended to start slip suppression control after the drive wheel and driven wheel speeds have become detectable is known and Patent Document 2, for example, discloses the scheme.

### Prior Art Documents

### Patent Documents

Patent Document 1: JP-2002-27610-A
Patent Document 2: JP-4-103845-A

The european patent EP1905637 discloses: an electric motor which is coupled to driving wheel; When a slippage of the driving wheels is detected, the electric motor produces a regenerative torque to suppress the slippage of the driving wheels. The regenerative torque is controlled in a variable manner according to an index parameter that indicates a road surface condition. Thus, when the slippage of the driving wheels occurs, the slippage of the driving wheels is suppressed according to the road surface condition by a regenerative operation of the electric motor coupled to the driving wheels.

### Summary of the Invention

### Problems to be Solved by the Invention

As described in Patent Document 2, however, the scheme intended to start slip suppression control after the drive wheel and driven wheel speeds have become detectable has a problem of drive wheel slipping being likely to occur before a detectable drive wheel speed is reached. For example, consider a case in which a dump truck with a maximum loading capacity of 300 tons is started on a slick road. In this case, there can arise a situation in which, while drive wheel speeds increase, the drive wheels will slip to impede smooth increases in vehicle speed and hence in driven wheel speed. At this time, slip suppression control will remain inoperative until the driven wheel speeds have increased to a detectable wheel speed region, so up until this, the drive wheel speeds will continue to increase. In particular, in a case of starting a vehicle from a slippery upslope, since a dump truck, because of its large vehicle weight, is more influenced by gravity in a direction that the vehicle travels down the slope, this makes it even more difficult for driven wheels to increase in wheel speed and thus increasingly easy for drive wheels to increase in wheel speed.

As discussed above, starting a vehicle on a slick road will cause drive wheel slipping to continue augmenting until a detectable driven-wheel speed has been reached.

An object of the present invention is to provide an electrically driven vehicle that suppresses drive wheel slipping, even in low-speed regions where wheel speeds are undetectable.

### Means for Solving the Problems

(1) In order to achieve the above object, an aspect of the present invention implements an electrically driven vehicle having driven wheels and drive wheels, wherein the drive wheels are each driven by a specific electric motor, the vehicle further including control means to regulate a torque that is output from the motors, in order that if wheel speeds of the driven wheels or a body speed of the vehicle is less than a first setting value, wheel speeds of the drive wheels are less than a second setting value.
   The above configuration of the control means implements the suppression of drive wheel slipping, even in the low-speed regions where the wheel speeds are undetectable.
(2) In above item (1), the second setting value is preferably greater than the first setting value.
(3) In above items (2), the control means preferably includes: a slip state discriminator that discriminates a slip state of the drive wheels by the wheel speeds of the drive wheels and those of the driven wheels or by the wheel speeds of the drive wheels and the body speed of the vehicle, and upon detecting the slip state, outputs an ON command as a torque correction command or upon not detecting the slip state, outputs an OFF command as a torque correction command; a torque command arithmetic unit that regulates, in response to the torque correction command, a torque command addressed to the motors; and a torque controller that controls the motor-output torque to obey the torque command.
(4) In above item (3), the slip state discriminator preferably is further configured so that if the wheel speeds of the driven wheels or the body speed of the vehicle is less than the first setting value and the wheel speeds of the drive wheels are in excess of the second setting value, the discriminator detects that slipping is occurring.
(5) In item (3), the slip state discriminator preferably is further configured so that if the wheel speeds of the driven wheels are less than the first setting value or the body speed of the vehicle is less than the first setting value and the wheel speeds of the drive wheels are in excess of the second setting value, the discriminator detects that slipping is occurring, the discriminator being additionally configured so that if the detected slip state persists for a predefined time and the wheel speeds of the drive wheels are in excess of a third setting value, the discriminator detects that slipping is being continued.
(6) In item (3), the torque command arithmetic unit is preferably configured so that if the torque correction command is the ON command, the unit monotonically decrements the torque command addressed to the motors, and so that if the torque correction command is the OFF command, the unit monotonically increments the torque command addressed to the motors.
(7) In above item (6), when the torque command addressed to the motors is monotonically decremented, a rate of change of the torque command varies according to a particular loading quantity of the vehicle, and when the loading quantity is small, the rate of change increases in magnitude.
(8) In item (5), the third setting value is preferably smaller than the second setting value and greater than the first setting value.
(9) In item (3), if the wheel speeds of the driven wheels are in excess of the first setting value, the slip state discriminator preferably detects a slipping event in accordance with a slippage of the drive wheels that is computed from the wheel speeds of the driven wheels and those of the drive wheels.
(10) In above item (9), the slippage is preferably a slip ratio of the drive wheels or any one of possible differences between the wheel speeds of the drive wheels and those of the driven wheels.
(11) In item (3), if the body speed of the vehicle is in excess of the first setting value, the slip state discriminator preferably detects a slipping event in accordance with a slippage of the drive wheels that is computed from the body speed of the vehicle and the wheel speeds of the drive wheels.
(12) In above item (11), the slippage is preferably a slip ratio of the drive wheels or any one of possible differences between the wheel speeds of the drive wheels and the body speed of the vehicle.
(13) In order to achieve the above object, another aspect of the present invention implements an electrically driven vehicle having driven wheels and drive wheels, wherein the drive wheels are each driven by a specific electric motor, the vehicle further including control means configured so that if wheel speeds of the driven wheels or a body speed of the vehicle cannot be detected, in order to ensure that wheel speeds of the drive wheels are less than a predefined setting value, the control means regulates a torque that is output from the motors.

### Effects of the Invention

The present invention works effectively to suppress drive wheel slipping, even in the speed regions where the wheel speeds are undetectable.

### Brief Description of the Drawings

[Fig. 1]

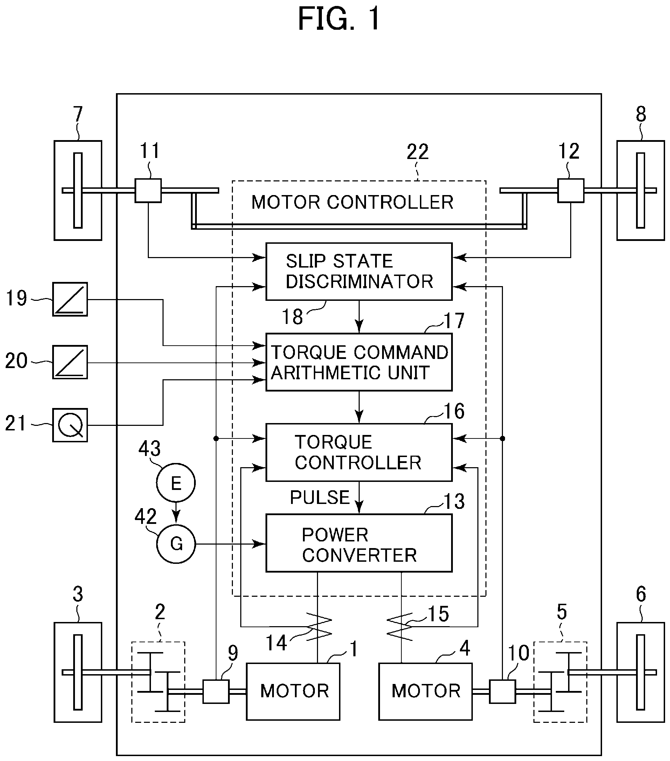

   Fig. 1 is a block diagram showing a configuration of an electrically driven vehicle according to a first embodiment of the present invention, the vehicle including a slip control device.
[Fig. 2]

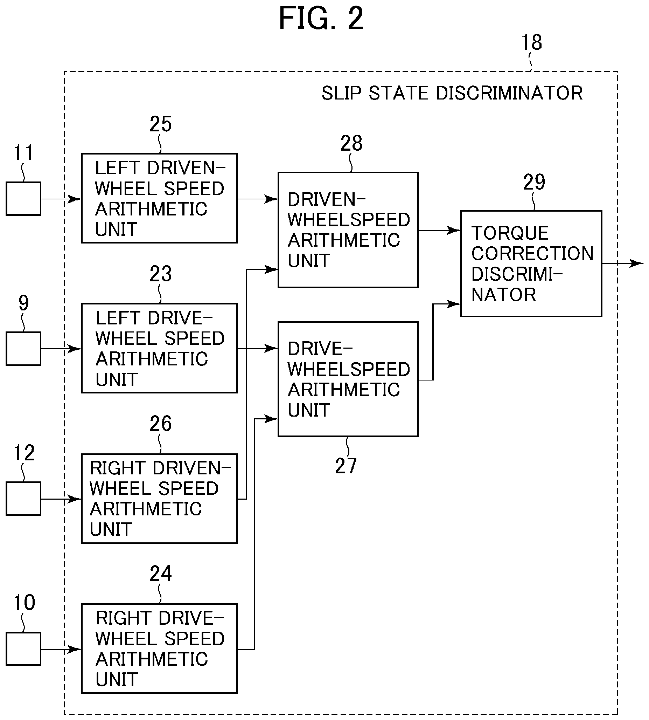

   Fig. 2 is a block diagram showing a configuration of a slip state discriminator used in the slip control device of the electrically driven vehicle according to the first embodiment of the present invention.
[Fig. 3]

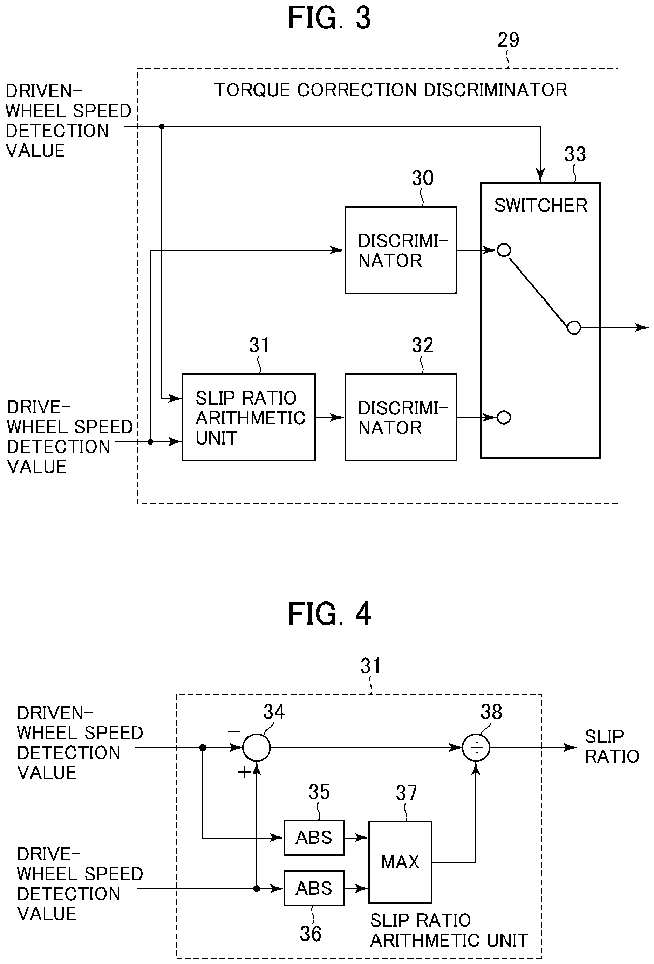

   Fig. 3 is a block diagram showing a configuration of a torque correction discriminator used in the slip control device of the electrically driven vehicle according to the first embodiment of the present invention.
[Fig. 4]
   Fig. 4 is a block diagram showing a configuration of a slip ratio arithmetic unit used in the slip control device of the electrically driven vehicle according to the first embodiment of the present invention.
[Fig. 5]

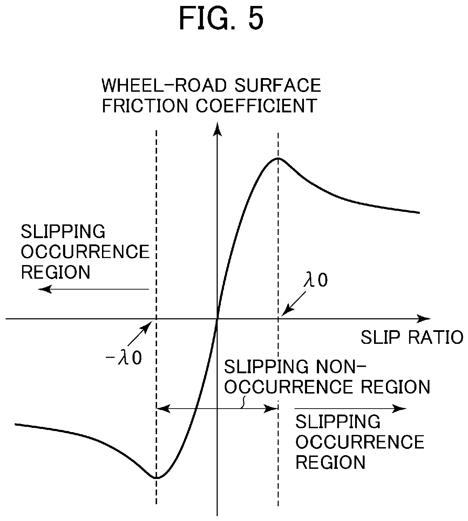

   Fig. 5 is an explanatory diagram of a relationship between a slip ratio and a wheel-road surface friction coefficient.
[Fig. 6]

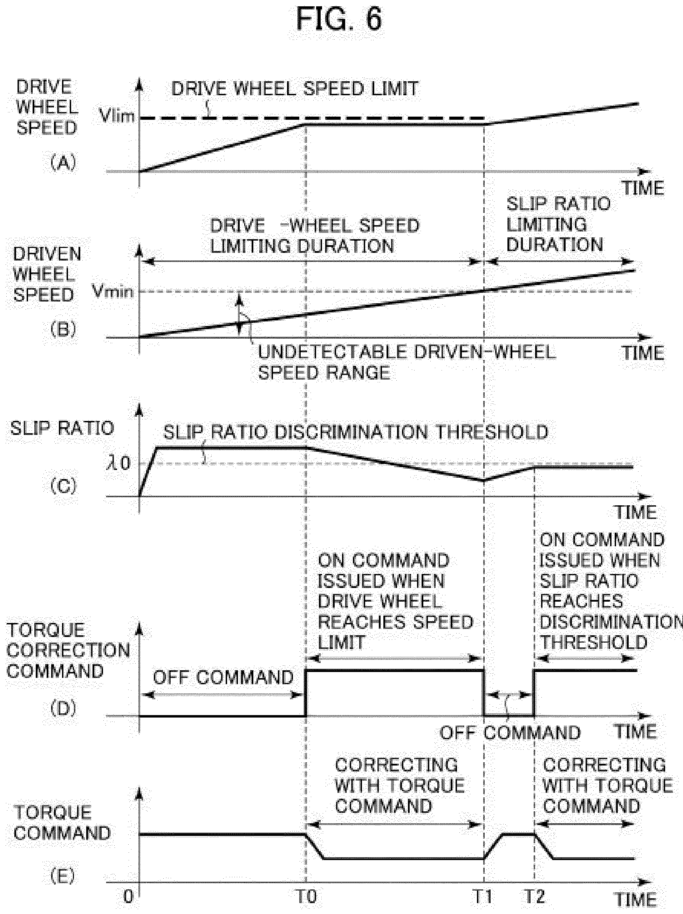

   Fig. 6 is a timing chart that shows operation of the torque correction discriminator used in the slip control device of the electrically driven vehicle according to the first embodiment of the present invention.
[Fig. 7]

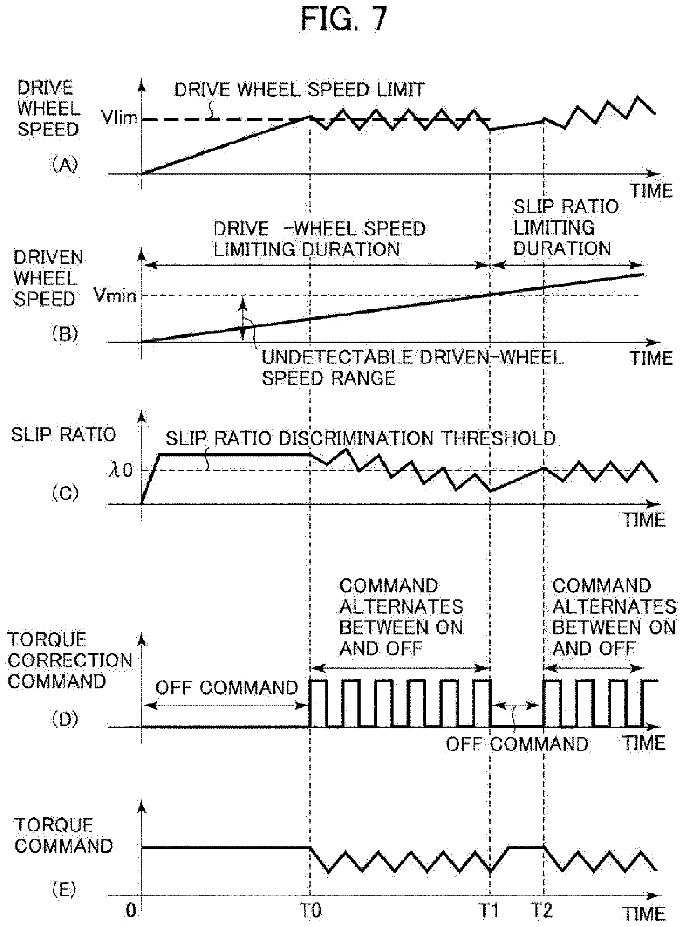

   Fig. 7 is a timing chart that illustrates operation of the torque command arithmetic unit used in the slip control device of the electrically driven vehicle according to the first embodiment of the present invention.
[Fig. 8]

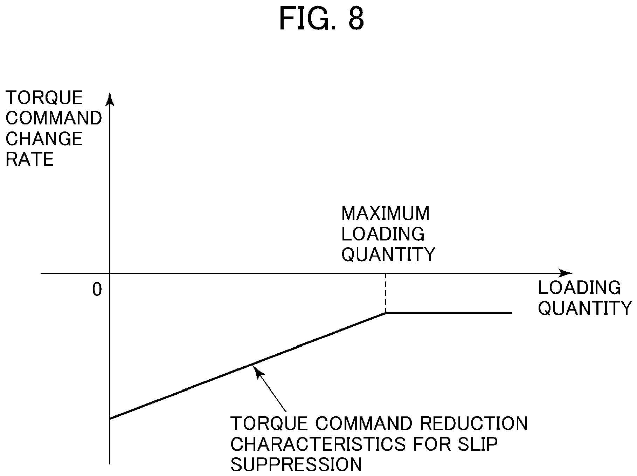

   Fig. 8 is an explanatory diagram showing a rate of change of a torque command in a modification of the electrically driven vehicle according to the first embodiment of the present invention.
[Fig. 9]

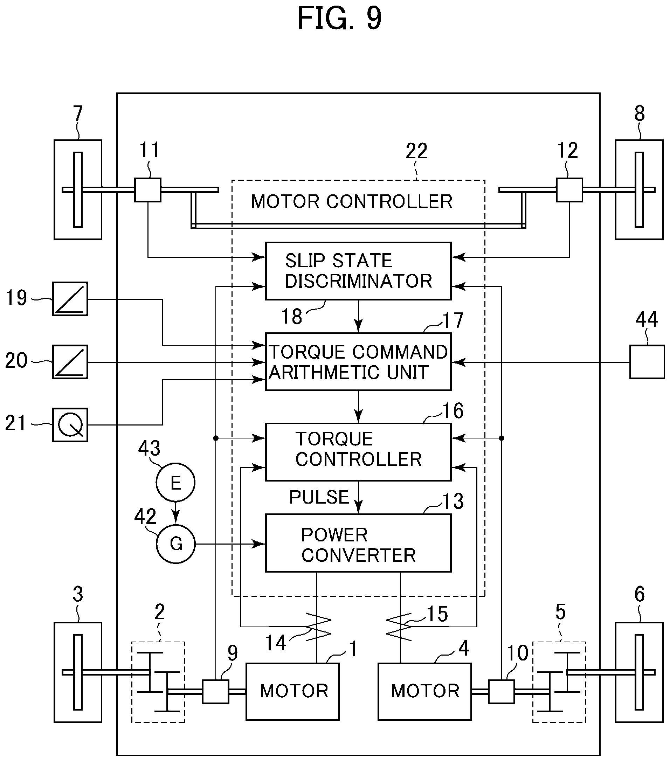

   Fig. 9 is a block diagram showing the modification of the electrically driven vehicle according to the first embodiment of the present invention.
[Fig. 10]

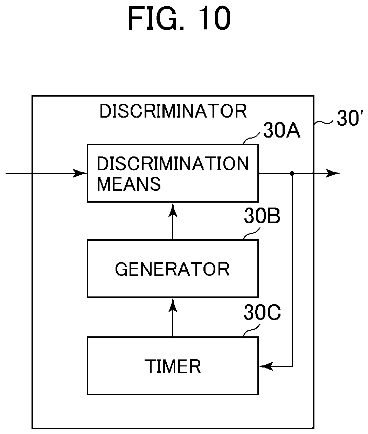

   Fig. 10 is a block diagram showing a configuration of a discriminator included in a torque correction discriminator used in a slip control device of an electrically driven vehicle according to a second embodiment of the present invention.
[Fig. 11]

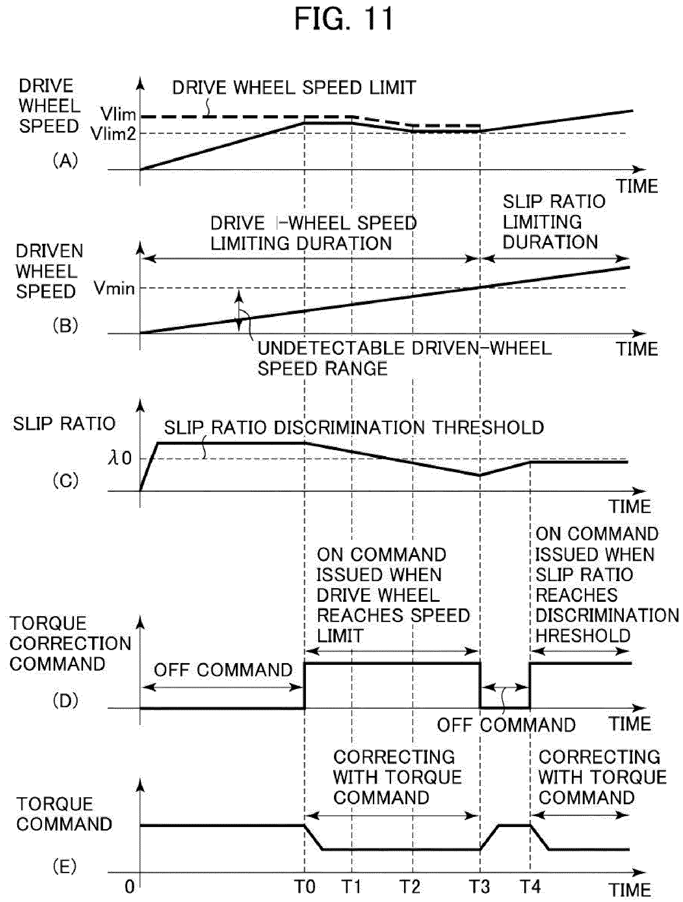

   Fig. 11 is a timing chart that shows operation of the torque correction discriminator used in the slip control device of the electrically driven vehicle according to the second embodiment of the present invention.
[Fig. 12]

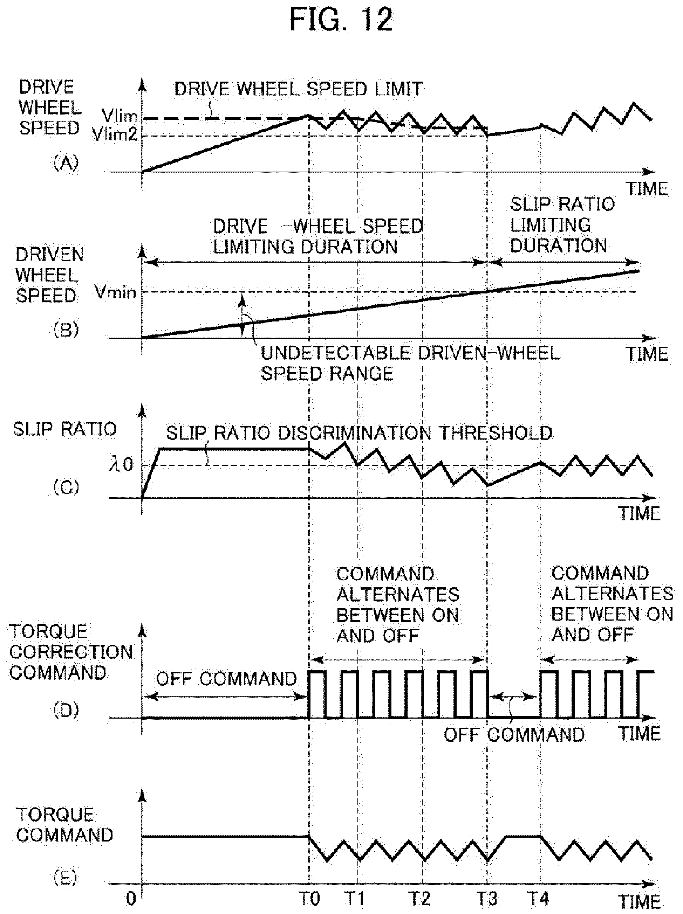

   Fig. 12 is a timing chart that illustrates operation of a torque command arithmetic unit used in the slip control device of the electrically driven vehicle according to the second embodiment of the present invention.
[Fig. 13]

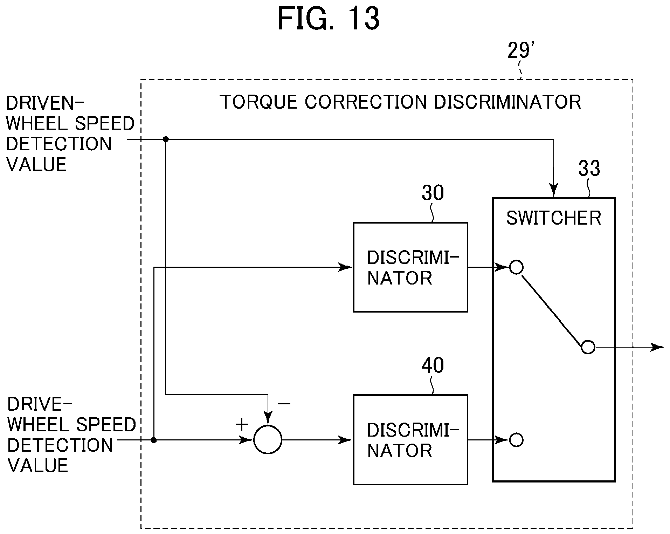

   Fig. 13 is a block diagram showing a configuration of a torque correction discriminator used in a slip control device of an electrically driven vehicle according to a third embodiment of the present invention.
[Fig. 14]

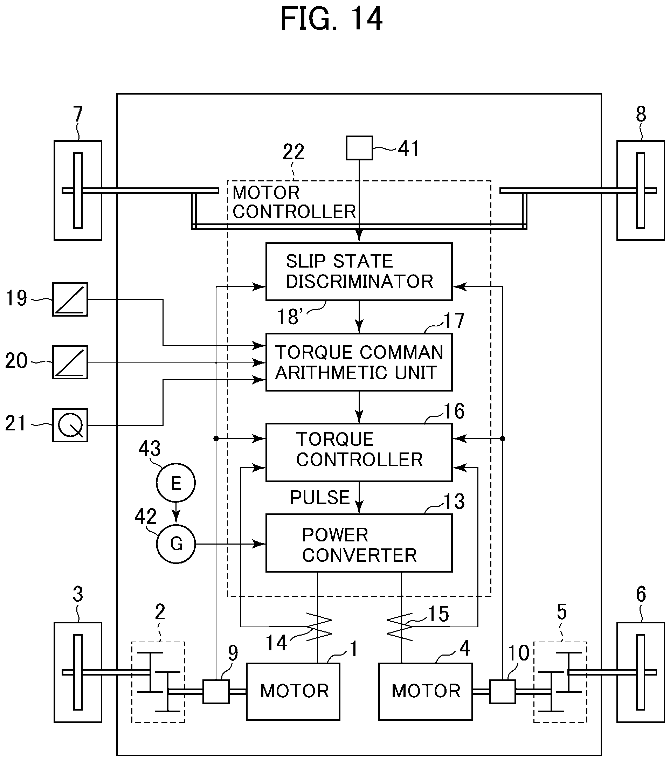

   Fig. 14 is a block diagram showing a configuration of an electrically driven vehicle according to a fourth embodiment of the present invention, the vehicle including a slip control device.
[Fig. 15]

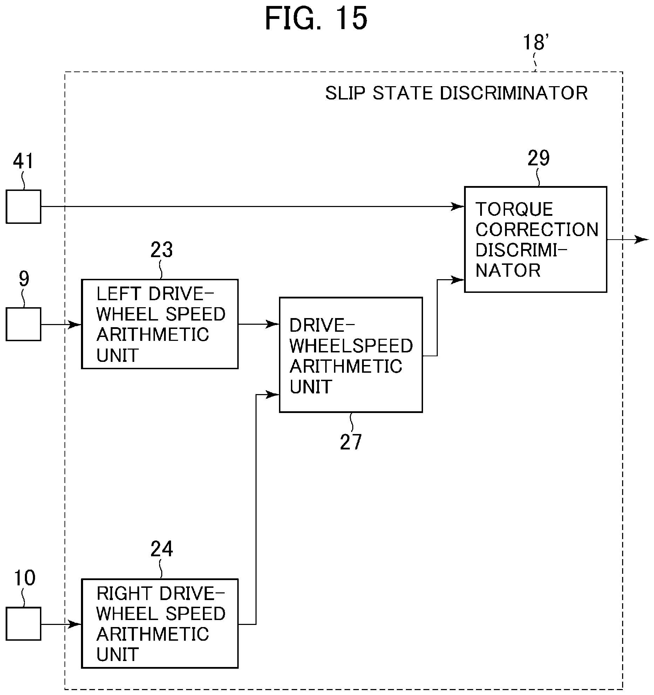

   Fig. 15 is a block diagram showing a configuration of a slip state discriminator used in the slip control device of the electrically driven vehicle according to the fourth embodiment of the present invention.

### Modes for Carrying Out the Invention

Hereunder, a configuration and operation of a slip control device of an electrically driven vehicle according to a first embodiment of the present invention will be described using Figs. 1 to 6.

A configuration of the electrically driven vehicle with the slip control device, in the first embodiment of the present invention, is first described below using Fig. 1.

Fig. 1 is a block diagram showing the configuration of the electrically driven vehicle according to the first embodiment of the present invention, the vehicle including the slip control device.

The vehicle travels forward or backward by driving a wheel 3 via a gear 2 by means of an electric motor 1, and driving a wheel 6 via a gear 5 by means of an electric motor 4. The motors 1 and 4 are, for example, induction motors. Synchronous motors may be used as an alternative to the motors 1 and 4.

The motors 1 and 4 are controlled by a motor controller 22. The motor controller 22 includes a power converter 13, a torque controller 16, a torque command arithmetic unit 17, and a slip state discriminator 18.

A power generator 42 is driven by an engine 43 to generate DC power. The power converter 13 converts the DC power which is generated by the generator 42 into three-phase AC power, thereby driving the motors 1 and 4.

A current detector 14 is connected between the power converter 13 and the motor 1, and detects a current flowing therebetween. A current detector 15 is connected between the power converter 13 and the motor 4, and detects a current flowing therebetween. A speed detector 9 is connected to the motor 1 and detects a speed at which the motor 1 rotates. A speed detector 10 is connected to the motor 4 and detects a speed at which the motor 4 rotates. A speed detector 11 is connected to an axle of a wheel 7 and detects a speed at which the wheel 7 rotates. A speed detector 12 is connected to an axle of a wheel 8 and detects a speed at which the wheel 8 rotates.

An accelerator pedal opening-angle detector 19 detects an opening angle of an accelerator pedal that is dictated by accelerator pedaling operations of a driver. A brake pedal opening-angle detector 20 detects an opening angle of a brake pedal that is dictated by brake pedaling operations of the driver. A steering wheel angle detector 21 detects an angle of a steering wheel that is dictated by steering wheel operations of the driver.

The torque command arithmetic unit 17 receives, as inputs, an accelerator pedal opening-angle detection value that the accelerator pedal opening-angle detector 19 outputs, a brake pedal opening-angle detection value that the brake pedal opening-angle detector 20 outputs, a steering wheel angle detection value that the steering wheel angle detector 21 outputs, and a torque correction command that the slip state discriminator 18 outputs. The torque command arithmetic unit 17 also outputs a torque command addressed to the motors 1 and 4.

In accordance with the torque command output from the torque command arithmetic unit 17 to the motor 1, the current detection value output from the current detector 14, and the rotational speed detection value output from the speed detector 9, the torque controller 16 outputs a gate pulse signal to the power converter 13 by pulse width modulation (PWM) control to ensure that the torque output from the motor 1 will obey the torque command issued thereto. In accordance with the torque command output from the torque command arithmetic unit 17 to the motor 4, the current detection value output from the current detector 15, and the rotational speed detection value output from the speed detector 10, the torque controller 16 also outputs another gate pulse signal to the power converter 13 by PWM control to ensure that the torque output from the motor 4 will obey the torque command issued thereto.

The power converter 13, after receiving the gate pulse signals, implements highly responsive torque control by rapid switching with a switching element such as an insulated gate bipolar transistor (IGBT).

The slip state discriminator 18 receives, as inputs, the rotational speed detection values output from the speed detectors 9, 10, 11, and 12, discriminates a slip state of the wheels 3 and 6 which are drive wheels, and outputs a torque correction command upon detection of slipping. Details of the slip state discriminator 18 will be described later herein using Fig. 2. If the torque correction command that the slip state discriminator 18 has output is an ON command, the torque command arithmetic unit 17 reduces the torque command that the unit 17 is to output. The reduction prevents slipping of the wheels 3 and 6, the drive wheels.

Next, a configuration of the slip state discriminator 18 used in the slip control device of the electrically driven vehicle according to the present embodiment is described below using Fig. 2.

Fig. 2 is a block diagram showing the configuration of the slip state discriminator used in the slip control device of the electrically driven vehicle according to the first embodiment of the present invention.

The slip state discriminator 18 includes a left drive-wheel speed arithmetic unit 23, a right drive-wheel speed arithmetic unit 24, a left driven-wheel speed arithmetic unit 25, a right driven-wheel speed arithmetic unit 26, a drive-wheel speed arithmetic unit 27, a driven-wheel speed arithmetic unit 28, and a torque correction discriminator 29.

The left drive-wheel speed arithmetic unit 23 receives, as an input, the rotational speed detection value of the motor 1, output from the speed detector 9, and outputs a wheel speed detection value of the wheel 3. The right drive-wheel speed arithmetic unit 24 receives, as an input, the rotational speed detection value of the motor 4, output from the speed detector 10, and outputs a wheel speed detection value of the wheel 6.

The left driven-wheel speed arithmetic unit 25 receives, as an input, the rotational speed detection value of the wheel 7, output from the speed detector 11, and outputs a wheel speed detection value of the wheel 7. The right driven-wheel speed arithmetic unit 26 receives, as an input, the rotational speed detection value of the wheel 8, output from the speed detector 12, and outputs a wheel speed detection value of the wheel 8.

The drive-wheel speed arithmetic unit 27 receives, as inputs, the wheel speed detection value of the wheel 3, output from the left drive-wheel speed arithmetic unit 23, and the wheel speed detection value of the wheel 6, output from the right drive-wheel speed arithmetic unit 24, and outputs an average value of these inputs as a drive-wheel speed detection value. The driven-wheel speed arithmetic unit 28 receives, as inputs, the wheel speed detection value of the wheel 7, output from the left driven-wheel speed arithmetic unit 25, and the wheel speed detection value of the wheel 8, output from the right driven-wheel speed arithmetic unit 26, and outputs an average value of these inputs as a driven-wheel speed detection value.

The torque correction discriminator 29 receives, as inputs, the drive-wheel speed detection value output from the drive-wheel speed arithmetic unit 27, and the driven-wheel speed detection value output from the driven-wheel speed arithmetic unit 28, and then determines whether the wheels 3 and 6 that are the drive wheels are slipping. Details of the torque correction discriminator 29 will be described later herein using Fig. 3. If slipping is determined to be occurring, the ON command is output to the torque command arithmetic unit 17 as a torque correction command for reduced torque output from the motors 1 and 4. If slipping is determined not to be occurring, the OFF command is output to the torque command arithmetic unit 17 as a torque correction command for no reduced torque output from the motors 1 and 4.

Next, a configuration of the torque correction discriminator 29 used in the slip control device of the electrically driven vehicle according to the present embodiment is described below using Fig. 3.

Fig. 3 is a block diagram showing the configuration of the torque correction discriminator used in the slip control device of the electrically driven vehicle according to the first embodiment of the present invention.

The torque correction discriminator 29 includes discriminators 30 and 32, a slip ratio arithmetic unit 31, and a switcher 33.

The discriminator 30, after receiving a drive-wheel speed detection value, determines whether the torque output from the motors 1 and 4 is to be corrected, and then outputs determination results as a torque correction command. More specifically, the discriminator 30 outputs the ON command as the torque correction command if the drive-wheel speed detection value is greater than a predefined drive-wheel speed setting value Vlim, or outputs the OFF command in all other cases.

The slip ratio arithmetic unit 31 outputs a drive-wheel slip ratio detection value with the drive-wheel speed detection value and the driven-wheel speed detection value as inputs. Details of the slip ratio arithmetic unit 31 will be described later herein using Fig. 4.

The discriminator 32, after receiving the slip ratio detection value output from the slip ratio arithmetic unit 31, determines whether the torque output from the motors 1 and 4 is to be corrected, and then outputs determination results as a torque correction command. More specifically, the discriminator 32 outputs the ON command as the torque correction command if the slip ratio detection value output from the slip ratio arithmetic unit 31 is on a verge of exceeding a predefined value λ0 or outputs the OFF command in all other cases.

If a driven-wheel speed detection value is less than a predefined driven-wheel speed setting value Vmin, the switcher 33 outputs to next stage the torque correction command received from the discriminator 30. If the driven-wheel speed detection value is greater than the predefined driven-wheel speed setting value Vmin, the switcher 33 outputs to the next stage the torque correction command received from the discriminator 32. Therefore, if the driven-wheel speed detection value is less than the predefined driven-wheel speed setting value Vmin and the drive-wheel speed detection value is greater than the predefined drive-wheel speed setting value Vlim, the torque correction discriminator 29 outputs the ON command as the torque correction command. If the driven-wheel speed detection value is greater than the predefined driven-wheel speed setting value Vmin and the slip ratio detection value is on the verge of exceeding λ0, the torque correction discriminator 29 outputs the ON command as the torque correction command.

Upon the ON command being output as the torque correction command from the torque correction discriminator 29, the torque command arithmetic unit 17 reduces the torque command to be output. If the driven-wheel speed detection value is less than the predefined driven-wheel speed setting value Vmin, therefore, the drive-wheel speed detection value becomes less than the predefined drive-wheel speed setting value Vlim to suppress slipping of the drive wheel. If the driven-wheel speed detection value is greater than the predefined driven-wheel speed setting value Vmin, the slip ratio detection value of the drive wheel speed becomes less than the slip discrimination threshold λ0 to suppress slipping of the drive wheel.

The driven-wheel speed setting value Vmin is a minimum speed at which the wheel speed of the driven wheel can be detected. For example, if the minimum speed that the speed detectors 9, 10, 11, 12 can detect is 2 to 3 km/h, the driven-wheel speed setting value Vmin is 3 km/h. The drive-wheel speed setting value Vlim is about 1 to 2 km/h greater than the driven-wheel speed setting value Vmin. The drive-wheel speed setting value Vlim is 5 km/h, for example. Because of this, in low-speed regions where a slip ratio cannot be properly detected, slipping is suppressed by limiting the drive wheel speed to its smallest possible value, and in speed regions where the slip ratio can be properly detected, slipping is suppressed on the basis of the slip ratio detection value. The slip discrimination threshold λ0 is preferably set to be a slip ratio that maximizes a drive wheel-road surface friction coefficient. It is possible, by so doing, to utilize the drive wheel to such a degree that the wheel does not slip.

The switcher 33 here sets the minimum detectable driven wheel speed as the driven-wheel speed setting value Vmin used as a threshold for the discrimination relating to output switching. If the wheel speed of the driven wheel cannot be detected, therefore, the appropriate motor can be controlled to obtain a drive wheel speed less than its predefined limit value.

Next, a configuration and operation of the slip ratio arithmetic unit 31 used in the slip control device of the electrically driven vehicle according to the present embodiment are described using Figs. 4 and 5.

Fig. 4 is a block diagram showing the configuration of the slip ratio arithmetic unit used in the slip control device of the electrically driven vehicle according to the first embodiment of the present invention. Fig. 5 is an explanatory diagram of a relationship between the slip ratio and the wheel-road surface friction coefficient.

The slip ratio arithmetic unit 31 includes a subtractor 34, absolute value computing elements 35 and 36, a maximum value selector 37, and a divider 38.

The subtractor 34 receives a drive-wheel speed detection value and a driven-wheel speed detection value, and outputs a difference between the two detection values. The absolute value computing element 35 receives the driven-wheel speed detection value and outputs an absolute value thereof. The absolute value computing element 36 receives the drive-wheel speed detection value and outputs an absolute value thereof. The maximum value selector 37 receives the values output from the absolute value computing elements 35 and 36, and outputs the greater of the two output values. The divider 38 divides the output of the subtractor 34 by the output of the maximum value selector 37, and outputs a drive wheel slip ratio λ as a result of the division. Although the drive wheel slip ratio λ originally needs to be computed using a ground speed of the drive wheel, the wheel speed of the appropriate driven wheel is used as an approximate value of the ground speed in the present example.

Fig. 5 represents the relationship between the slip ratio λ and the wheel-road surface friction coefficient. A negative friction coefficient region in the figure indicates that a force developed between the wheel and the road surface is oriented in a direction opposite to a traveling direction of the vehicle.

In general, in a region with smaller slip ratios, as the slip ratio increases in magnitude, the friction coefficient between the wheel and the road surface also increases in magnitude. This, in turn, increases the force acting between the wheel and the road surface, resulting in no slipping. Referring to Fig. 5, a region in which the slip ratio λ satisfies -λ0<λ<λ0 is where no slipping occurs.

If the magnitude of the slip ratio exceeds a certain region, on the other hand, the increase in the magnitude of the slip ratio causes the magnitude of the wheel-road surface friction coefficient to decrease on the contrary, so the force acting between the wheel and the road surface will also decrease and slipping will occur. Referring to Fig. 5, regions in which the slip ratio λ satisfies λ>λ0 or λ<-λ0 are where slipping does occur. For these reasons, the slip ratio λ is, in general, desirably controlled to satisfy - λ0<λ<λ0. The slip ratio λ, a threshold for determining whether slipping is occurring, is set to range, for example, between 0.1 and 0.2.

Next, a configuration and operation of the torque correction discriminator 29 in the slip control device of the electrically driven vehicle according to the present embodiment are described using Fig. 6.

Fig. 6 is a timing chart that shows the operation of the torque correction discriminator used in the slip control device of the electrically driven vehicle according to the first embodiment of the present invention.

Referring to Fig. 6, a horizontal axis denotes time. A vertical axis in section (A) of Fig. 6 denotes changes in the drive wheel speed calculated by the drive-wheel speed arithmetic unit 27 in Fig. 2. A vertical axis in section (B) of Fig. 6 denotes changes in the driven wheel speed calculated by the driven-wheel speed arithmetic unit 28 of Fig. 2. Section (C) of Fig. 6 denotes changes in the slip ratio λ calculated by the slip ratio arithmetic unit 31 in Fig. 3. Section (D) of Fig. 6 denotes changes in a state of the torque correction command output from the switcher 33 in Fig. 3. Section (E) of Fig. 6 denotes changes in a state of the torque command output from the torque command arithmetic unit 17 in Fig. 1.

As shown in section (B) of Fig. 6, let the driven wheel speed be smaller than the driven-wheel speed setting value Vmin, between time 0 and time T1. This time interval denotes an elapsed time existing immediately after a start of the vehicle, and the determination results by the discriminator 30 are adopted as a torque correction command by the switcher 33 in Fig. 3.

For example, if, as shown in section (A) of Fig. 6, the drive wheel speed increases to a verge of going beyond the drive-wheel speed setting value Vlim at time T0, the torque correction discriminator 29 outputs the ON command as a torque correction command. Here, between the time T0 and the time T1, the torque correction command is the ON command, and as shown in section (E) of Fig. 6, the torque command arithmetic unit 17 upon receiving the torque correction command reduces the torque command to be output. Consequently as shown in section (A) of Fig. 6, the drive wheel speed is controlled not to exceed the drive-wheel speed setting value Vlim.

If the driven wheel speed goes beyond the driven-wheel speed setting value Vmin at the time T1, the determination results by the discriminator 32 are adopted as a torque correction command by the switcher 33 in Fig. 3. Since the discriminator 32 refers to the slip ratio λ computed by the slip ratio arithmetic unit 31, the slip ratio λ is smaller than the slip discrimination threshold λ0 between the time T1 and time T2, and as shown in section (D) of Fig. 6, the torque correction discriminator 29 outputs the OFF command as a torque correction command.

In contrast to the above, if, as shown in section (C) of Fig. 6, the slip ratio of the drive wheel increases to a verge of going beyond λ0 at the time T2, the torque correction discriminator 29 outputs the ON command as a torque correction command, as shown in section (D) of Fig. 6. The torque command arithmetic unit 17 then receives the torque correction command and as shown in section (E) of Fig. 6, reduces the torque command to be output. Consequently, the slip ratio of the drive wheel is controlled not to exceed λ0.

As described above, when the driven wheel speed is in a low-speed region not overstepping the driven-wheel speed setting value Vmin, the present embodiment controls the drive wheel speed not to exceed the drive-wheel speed setting value Vlim, and when the driven wheel speed is in a speed region overstepping the driven-wheel speed setting value Vmin, the embodiment controls the slip ratio of the drive wheel not to exceed λ0. Thus, drive wheel slipping is suppressed at virtually all wheel speeds from the low-speed regions where wheel speed detection is impossible, to high-speed regions in which wheel speed detection is possible. Stable traveling of the vehicle existing immediately after it has been started is therefore realized.

Operation of the torque command arithmetic unit 17 used in the slip control device of the electrically driven vehicle according to the present embodiment is described below using Fig. 7.

Fig. 7 is a timing chart that illustrates the operation of the torque command arithmetic unit used in the slip control device of the electrically driven vehicle according to the first embodiment of the present invention.

Operational details of the torque command arithmetic unit 17 have not been described hitherto. In fact, however, the torque command arithmetic unit is configured so that upon receiving the ON command as a torque correction command, the unit monotonically decrements the torque command from its original value, and so that upon receiving the OFF command as a torque correction command, the unit monotonically increments the torque command towards the original value.

Fig. 7 shows an example of a related operational waveform. Referring to Fig. 6, for simplicity's sake, between the time T0 and T1 during which the drive wheel speed is controlled not to exceed the drive-wheel speed setting value Vlim, and at and after the time T2 when the slip ratio of the drive wheel is controlled not to exceed λ0, the torque correction command is shown as the ON command. When the torque command arithmetic unit 17 operates as described above, however, the torque correction command has a waveform that alternates between ON and OFF, since, as shown in Fig. 7, an actual wheel speed repeats going above and below the drive-wheel speed setting value Vlim during the T0-T1 time interval and an actual slip ratio of the drive wheel repeats going above and below λ1 at the time T2 onward. As a result, the torque command is regulated for the drive wheel speed to be controlled to stay near the drive-wheel speed setting value Vlim during the T0-T1 time interval and for the slip ratio of the drive wheel to be controlled to stay near λ0 at the time T2 onward.

Next, a modification of the electrically driven vehicle according to the present embodiment is described below using Figs. 8 and 9.

Fig. 8 is an explanatory diagram showing a rate of change of the torque command in the modification of the electrically driven vehicle according to the first embodiment of the present invention. Fig. 9 is a block diagram showing the modification of the electrically driven vehicle according to the first embodiment of the present invention.

Since the dump truck is very heavy in a fully loaded condition, a body weight of the vehicle significantly changes according to loading quantity, which in turn causes a significant change in easiness level of drive wheel slipping according to loading quantity. This is because, since the frictional force acting between the wheels and the road surface is proportional to a weight load upon the wheels, the change in loading quantity also changes the frictional force. In general, a decrease in loading quantity correspondingly reduces the frictional force, so the drive wheels, in particular, slip more easily. Therefore, if drive wheel slipping actually occurs with a small loading quantity, slipping can better be suppressed by reducing the drive wheel torque command within a shorter time.

Accordingly, as shown in Fig. 8, the rate of change of the drive wheel torque command may be varied according to the particular loading quantity. This enables the drive wheel torque command to be reduced within a minimum time, even if slipping is encountered with a small loading quantity.

A loading quantity detector for detecting the loading quantity is required in that case. A block diagram showing a related configuration of the electrically driven vehicle is shown in Fig. 9. Differences from the configuration shown in Fig. 1 are that the vehicle includes the loading quantity detector 44 and that the torque command arithmetic unit 17 is replaced by a torque command arithmetic unit 17'. In addition to the values that the arithmetic unit 17 receives, the torque command arithmetic unit 17' receives a loading quantity detection value output from the loading quantity detector 44. The torque command arithmetic unit 17' has a function by which the rate of change of the drive wheel torque command to be reduced upon detection of drive wheel slipping is varied according to the loading quantity detection value output from the loading quantity detector 44.

Next, a configuration and operation of a slip control device of an electrically driven vehicle according to a second embodiment are described using Figs. 10 and 11. The electrically driven vehicle according to the present embodiment, having the slip control device, is substantially of the same configuration as that shown in Fig. 1. Additionally a slip state discriminator 18 used in the slip control device of the electrically driven vehicle according to the present embodiment is substantially of the same configuration as that shown in Fig. 2. Furthermore, a torque correction discriminator 29 used in the slip control device of the electrically driven vehicle according to the present embodiment basically has substantially the same configuration as that shown in Fig. 3, but differs in a configuration and operation of the discriminator 30.

Fig. 10 is a block diagram showing a configuration of a discriminator 30' included in the torque correction discriminator used in the slip control device of the electrically driven vehicle according to the second embodiment of the present invention. Fig. 11 is a timing chart that shows operation of the torque correction discriminator used in the slip control device of the electrically driven vehicle according to the second embodiment of the present invention.

As shown in Fig. 10, the discriminator 30' includes discrimination means 30A, a drive-wheel speed setting value generator 30B, and a timer circuit 30C. The discrimination means 30A outputs an ON command as a torque correction command if a drive-wheel speed detection value exceeds a drive wheel speed setting value that has been set in the drive-wheel speed setting value generator 30B. At time 0 to time T1, as denoted by a broken line in section (A) of Fig. 11, the drive-wheel speed setting value generator 30B initially generates a first drive-wheel speed setting value Vlim. At time T0, if the drive-wheel speed detection value denoted by a solid line increases to a verge of the first drive-wheel speed setting value Vlim, the timer circuit 30C operates to measure a passage of time of the day from T0 to T1. At T1 to T2 time of the day in section (A) of Fig. 11, as denoted by the broken line, the drive wheel speed is gradually reduced from the first drive-wheel speed setting value Vlim, towards a second drive wheel-speed setting value Vlim2, and when the setting value Vlim2 is reached, the value is retained.

Operation of the present embodiment is described below using Fig. 11.

For example, at the time T0, as shown in section (A) of Fig. 11, if the drive wheel speed increases to the verge of the drive-wheel speed setting value Vlim, the torque correction discriminator 29 outputs the ON command as the torque correction command, as shown in section (D) of Fig. 11. Here, between the time T0 and the time T1, the torque correction command is the ON command and as shown in section (E) of Fig. 11, a torque command arithmetic unit 17 upon receiving the torque correction command reduces a torque command to be output, so as shown in section (A) of Fig. 11, the drive wheel speed is controlled not to go beyond the drive-wheel speed setting value Vlim.

As denoted by the broken line in section (A) of Fig. 11, during the time interval from T0 to T1, the drive wheel speed is limited to or below the drive-wheel speed setting value Vlim. Upon the timer circuit 30B measuring the passage of time from T0 to T1, however, as denoted by the broken line, the drive wheel speed limit is lowered from the first drive-wheel speed setting value Vlim to the second drive-wheel speed setting value Vlim2. Between the time T2 and the time T3, the drive wheel speed limit is fixed at the drive-wheel speed setting value Vlim2. The drive wheel speed limit is reduced when the state in which the drive wheel speed is controlled not to exceed the drive-wheel speed setting value Vlim continues for a definite time interval in that form.

Reducing the drive wheel speed limit lessens drive wheel slipping in magnitude. With this result that a drive wheel-road surface friction coefficient increases in magnitude. This, in turn, also increases a force acting between the drive wheels and the road surface, and improves accelerability of the vehicle. The second drive-wheel speed setting value Vlim2 needs to be greater than a driven-wheel speed setting value Vmin. If the first drive-wheel speed setting value Vlim is 5 km/h and the driven-wheel speed setting value Vmin is 3 km/h, the second drive-wheel speed setting value Vlim2 needs to be 4 km/h, for example. This is because, if the drive wheel speed limit is reduced below the driven-wheel speed setting value Vmin, the driven wheel speed does not exceed the driven-wheel speed setting value Vmin and consequently the drive wheel speed continues to be limited to impede increases in vehicle speed.

At the time T3, as shown in section (B) of Fig. 11, if the driven wheel speed goes beyond the driven-wheel speed setting value Vmin, the discrimination results by the discriminator 32 are adopted as the torque correction command by the switcher 33 of Fig. 3. The discriminator 32 refers to the slip ratio λ computed by the slip ratio arithmetic unit 31. Between the time T3 and time T4, the slip ratio λ is smaller than the slip discrimination threshold λ0, and as shown in section (D) of Fig. 11, the torque correction discriminator 29 outputs the OFF command as a torque correction command.

In contrast to the above, if, as shown in section (C) of Fig. 11, the slip ratio of the drive wheel increases to the verge of going beyond λ0 at the time T4, the torque correction discriminator 29 outputs the ON command as a torque correction command, as shown in section (D) of Fig. 11. The torque command arithmetic unit 17 then receives the torque correction command and as shown in section (E) of Fig. 11, reduces the torque command to be output. Consequently, the slip ratio of the drive wheel is controlled not to exceed λ0.

As described above, in the low-speed region where the driven wheel speed stays below the driven-wheel speed setting value Vmin, when the state in which the drive wheel speed is controlled not to exceed the drive-wheel speed setting value Vlim continues for a definite time interval, reduction in drive wheel speed limit below the drive-wheel speed setting value Vlim enables the suppression of drive wheel slipping in the low-speed region where wheel speed detection is impossible. The reduction in drive wheel speed limit also enables the improvement of vehicle accelerability.

Operation of the torque command arithmetic unit 17 used in the slip control device of the electrically driven vehicle according to the present embodiment is described below using Fig. 12.

Fig. 12 is a timing chart that illustrates the operation of the torque command arithmetic unit used in the slip control device of the electrically driven vehicle according to the second embodiment of the present invention.

The torque command arithmetic unit 17, upon receiving the ON command as a torque correction command, monotonically decrements the torque command from its original command, and upon receiving the OFF command as a torque correction command, monotonically increments the torque command towards the original command. During such operation, the torque command arithmetic unit 17 generates substantially the same operational waveform as that shown in Fig. 7. The waveform is shown in Fig. 12. In the present embodiment, the rate of change of the drive wheel torque command may also be varied according to loading quantity.

Next, a configuration and operation of a slip control device of an electrically driven vehicle according to a third embodiment are described using Fig. 13. The electrically driven vehicle according to the present embodiment, having the slip control device, is substantially of the same configuration as that shown in Fig. 1. Additionally, a slip state discriminator 18 used in the slip control device of the electrically driven vehicle according to the present embodiment is substantially of the same configuration as that shown in Fig. 2.

Fig. 13 is a block diagram showing a configuration of a torque correction discriminator used in the slip control device of the electrically driven vehicle according to the third embodiment of the present invention.

A torque correction discriminator 29' includes discriminators 30 and 40, a switcher 33, and a subtractor 39.

In the embodiment described per Fig. 3, the torque correction discriminator 29 has suppressed a drive wheel slip by controlling the drive wheel slip ratio not to exceed λ0 in the speed region where the driven wheel speed stays at or above the driven-wheel speed setting value Vmin.

In contrast to this, the torque correction discriminator 29' controls the difference between the drive wheel speed and the driven wheel speed so as not to exceed a predefined value. The subtractor 39 outputs the difference between the drive-wheel speed detection value and the driven-wheel speed detection value. The discriminator 40 receives the differential speed detection value output from the subtractor 39, and if the differential speed detection value is greater than a predefined differential speed discrimination value V0, the discriminator 40 outputs the ON command as a torque correction command. If the differential speed detection value is not greater than V0, the discriminator 40 outputs the OFF command. Controlling in this way the difference between the drive wheel speed and the driven wheel speed so as not to exceed the differential speed discrimination value V0 is also useful for suppressing a drive wheel slip. The differential speed discrimination value V0 is, for example, between 2 km/h and 4 km/h.

As described above, when the driven wheel speed is in a low-speed region not overstepping the driven-wheel speed setting value Vmin, the present embodiment controls the drive wheel speed not to exceed the drive-wheel speed setting value Vlim. In addition, when the driven wheel speed is in a speed region overstepping the driven-wheel speed setting value Vmin, the embodiment controls the difference between the drive wheel speed and the driven wheel speed so as not to exceed the differential speed discrimination value V0. Thus, drive wheel slipping is suppressed at virtually all wheel speeds from the low-speed regions where wheel speed detection is impossible, to the high-speed regions where wheel speed detection is possible. Stable traveling of the vehicle existing immediately after it has been started is therefore realized.

Next, a configuration and operation of a slip control device of an electrically driven vehicle according to a fourth embodiment are described using Figs. 14 and 15.

Fig. 14 is a block diagram showing a configuration of the electrically driven vehicle according to the fourth embodiment of the present invention, the vehicle including the slip control device. Fig. 15 is a block diagram showing a configuration of a slip state discriminator used in the slip control device of the electrically driven vehicle according to the fourth embodiment of the present invention. In Figs. 14 and 15, the same reference numbers or symbols as used in Figs. 1 and 2 denote the same elements.

As shown in Fig. 14, the present embodiment includes a vehicle body speed detector 41, instead of the speed detectors 11 and 12 shown in Fig. 1, and uses a vehicle body speed detection value that the vehicle body speed detector 41 outputs, as an alternative to the driven-wheel speed detection value in the first embodiment. The vehicle body speed can be detected by, for example, using a non-contact type of ground speed sensor or a global positioning system (GPS).

As shown in Fig. 15, the slip state discriminator 18', unlike the slip state discriminator 18 shown in Fig. 2, inputs the vehicle body speed detection value, instead of the driven-wheel speed detection value, to a torque correction discriminator 29. Since the driven wheel speed generally agrees with the vehicle body speed, the vehicle body speed detection value can be used in this way, instead of the driven-wheel speed detection value.

Here, setting the lowest detectable vehicle body speed as the vehicle body speed setting value Vmin used for output switching discrimination makes the switcher 33 (see Fig. 3) in the torque correction discriminator 29 control the motors so that if the vehicle body speed cannot be detected, the drive wheel speed is less than the predefined limit value.

As described above, when the driven wheel speed is in a low-speed region not overstepping the driven-wheel speed setting value Vmin, the present embodiment controls the drive wheel speed not to exceed the drive-wheel speed setting value Vlim. In addition, when the driven wheel speed is in a speed region overstepping the driven-wheel speed setting value Vmin, the embodiment controls the drive wheel slip ratio not to exceed λ0. Thus, drive wheel slipping is suppressed at virtually all wheel speeds from the low-speed regions where wheel speed detection is impossible, to the high-speed regions where wheel speed detection is possible. Stable traveling of the vehicle existing immediately after it has been started is therefore realized.

### Description of Reference Numerals

- 1 ...: Motor
- 2, 5 ...: Gears
- 3, 6, 7, 8 ...: Wheels
- 4 ...: Motor
- 9, 10, 11, 12 ...: Speed detectors
- 13 ...: Power converter
- 14, 15 ...: Current detectors
- 16 ...: Torque controller
- 17, 17' ...: Torque command arithmetic units
- 18, 18' ...: Slip state discriminators
- 19 ...: Accelerator pedal opening-angle detector
- 20 ...: Brake pedal opening-angle detector
- 21 ...: Steering wheel angle detector
- 22 ...: Motor controller
- 23 ...: Left drive-wheel speed arithmetic unit
- 24 ...: Right drive-wheel speed arithmetic unit
- 25 ...: Left driven-wheel speed arithmetic unit
- 26 ...: Right driven-wheel speed arithmetic unit
- 27 ...: Drive-wheel speed arithmetic unit
- 28 ...: Driven-wheel speed arithmetic unit
- 29, 29' ...: Torque correction discriminators
- 30, 30', 32, 40 ...: Discriminators
- 31 ...: Slip ratio arithmetic unit
- 33 ...: Switcher
- 34, 39 ...: Subtractors
- 35, 36 ...: Absolute value computing elements
- 37 ...: Maximum value selector
- 38 ...: Divider
- 41 ...: Vehicle body speed detector
- 42 ...: Power generator
- 43 ...: Engine
- 44 ...: Loading quantity detector

## Claims

1. An electrically driven vehicle having driven wheels (7, 8) and drive wheels (3, 6), wherein the drive wheels (3, 6) are each driven by a specific electric motor (1, 4), the vehicle further comprising:
control means (22) to regulate a torque that is output from the motors (1, 4), in order that upon wheel speeds of the driven wheels (7, 8) or a body speed of the vehicle being less than a first setting value, wheel speeds of the drive wheels (3, 6) are less than a second setting value and **characterized in that** it regulates the torque upon the wheel speeds of the driven wheels or the body speed of the vehicle being exceeding the first setting value, a slip state of the drive wheels (3, 6) is discriminated by the wheel speeds of the drive wheels (3, 6) and those of the driven wheels (7, 8) or by the wheel speeds of the drive wheels (3, 6) and the body speed of the vehicle, and upon the slip state being detected, the torque outputted from the motor (1, 4) is regulated to suppress the slip state.

2. The electrically driven vehicle according to claim 1, wherein:
the second setting value is greater than the first setting value.

3. The electrically driven motor vehicle according to claim 2, wherein, in order to regulate the motor-output torque so that upon the wheel speeds of the driven wheels (7, 8) or the body speed of the vehicle being less than the first setting value, the wheel speeds of the drive wheels (3, 6) are less than the second setting value, the control means includes:
a slip state discriminator (18) upon the wheel speeds of the driven wheels (7, 8) or the body speed of the vehicle exceeding the first setting value, that discriminates a slip state of the drive wheels (3, 6) by the wheel speeds of the drive wheels (3, 6) and those of the driven wheels (7, 8) or by the wheel speeds of the drive wheels (3, 6) and the body speed of the vehicle, and upon detecting the slip state, outputs an ON command as a torque correction command or upon not detecting the slip state, outputs an OFF command as a torque correction command;
a torque command arithmetic unit (17) that regulates, in response to the torque correction command, a torque command addressed to the motors (1, 4); and
a torque controller (16) that controls the motor-output torque to obey the torque command.

4. The electrically driven vehicle according to claim 3, wherein:
upon the wheel speeds of the driven wheels (7, 8) being less than the first setting value or the body speed of the vehicle being less than the first setting value and the wheel speeds of the drive wheels (3, 6) being in excess of the second setting value, the slip state discriminator detects that slipping is occurring.

5. The electrically driven motor vehicle according to claim 3, wherein:
upon the wheel speeds of the driven wheels (7, 8) or the body speed of the vehicle being less than the first setting value and the wheel speeds of the drive wheels (3, 6) being in excess of the second setting value, the slip state discriminator (18) detects that slipping is occurring; and
upon the slipping detection state persisting for a predefined time and the wheel speeds of the drive wheels (3, 6) being in excess of a third setting value, the slip state discriminator (18) further detects that slipping is being continued.

6. The electrically driven vehicle according to claim 3, wherein:
upon the torque correction command being the ON command, the torque command arithmetic unit (17) monotonically decrements the torque command addressed to the motors (1, 4); and
upon the torque correction command being the OFF command, the torque command arithmetic unit (17) monotonically increments the torque command addressed to the motors (1, 4).

7. The electrically driven vehicle according to claim 6, wherein:
upon the torque command addressed to the motors (1, 4) being monotonically decremented, a rate of change of the torque command varies according to a particular loading quantity of the vehicle; and
upon the loading quantity being small, the rate of change increases in magnitude.

8. The electrically driven vehicle according to claim 5, wherein:
the third setting value is smaller than the second setting value and greater than the first setting value.

9. The electrically driven vehicle according to claim 3, wherein:
upon the wheel speeds of the driven wheels (7, 8) exceeding the first setting value, the slip state discriminator (18) detects a slipping event in accordance with a slippage of the drive wheels (3, 6), computed from the wheel speeds of the driven wheels (7, 8) and those of the drive wheels (3, 6).

10. The electrically driven vehicle according to claim 9, wherein:
the slippage is a slip ratio of the drive wheels (3, 6) or any differences between the wheel speeds of the drive wheels (3, 6) and those of the driven wheels (7, 8).

11. The electrically driven vehicle according to claim 3, wherein:
upon the body speed of the vehicle exceeding the first setting value, the slip state discriminator (18) detects a slipping event in accordance with a slippage of the drive wheels (3, 6), computed from the body speed of the vehicle and the wheel speeds of the drive wheels (3, 6).

12. The electrically driven vehicle according to claim 11, wherein:
the slippage is a slip ratio of the drive wheels (3, 6) or any differences between the wheel speeds of the drive wheels (3, 6) and the body speed of the vehicle.

## Patentansprüche

1. Elektrisch betriebenes Fahrzeug mit angetriebenen Rädern (7, 8) und Antriebsrädern (3, 6), wobei die Antriebsräder (3, 6) jeweils durch einen eigenen Elektromotor (1, 4) angetrieben werden, wobei das Fahrzeug ferner aufweist:
Steuerungsmittel (22) zum Regeln eines Drehmoments, das von den Motoren (1, 4) abgegeben wird, derart, dass, wenn die Rad-drehgeschwindigkeiten der angetriebenen Räder (7, 8) oder eine Geschwindigkeit des Fahrzeugs kleiner als ein erster Einstellwert sind, die Raddrehgeschwindigkeiten der Antriebsräder (3, 6) kleiner als ein zweiter Einstellwert sind,
**dadurch gekennzeichnet, dass** das Steuerungsmittel das Drehmoment so regelt, dass, wenn die Raddrehgeschwindigkeiten der angetriebenen Räder oder die Geschwindigkeit des Fahrzeugs den ersten Einstellwert überschreiten, ein Schlupfzustand der Antriebsräder (3, 6) durch die Raddrehgeschwindigkeiten der Antriebsräder (3, 6) und der Raddrehgeschwindigkeiten der angetriebenen Räder (7, 8) oder durch die Raddrehgeschwindigkeiten der Antriebsräder (3, 6) und der Fahrzeuggeschwindigkeit diskriminiert wird, und wenn der Schlupfzustand erfasst wurde, das von dem Motor (1,4) abgegebene Drehmoment so geregelt wird, dass der Schlupfzustand unterdrückt wird.

2. Elektrisch betriebenes Fahrzeug nach Anspruch 1, wobei
der zweite Einstellwert größer als der erste Einstellwert ist.

3. Elektrisch betriebenes Fahrzeug nach Anspruch 2, wobei,
um das Motorabgabedrehmoment so zu regeln, dass, wenn die Raddrehgeschwindigkeiten der angetriebenen Räder (7, 8) oder die Fahrzeuggeschwindigkeit kleiner als der erste Einstellwert sind, die Raddrehgeschwindigkeiten der Antriebsräder (3, 6) kleiner als der zweite Einstellwert sind, wobei die Steuerungsmittel aufweisen:
einen Schlupfzustandsdiskriminator (18), der, wenn die Raddrehgeschwindigkeiten der angetriebenen Räder (7, 8) oder die Fahrzeugsgeschwindigkeit den ersten Einstellwert überschreiten, einen Schlupfzustand der Antriebsräder (3, 6) durch die Raddrehgeschwindigkeiten der Antriebsräder (3, 6) und der angetriebenen Räder (7, 8) oder durch die Raddrehgeschwindigkeiten der Antriebsräder (3, 6) und der Fahrzeuggeschwindigkeit diskriminiert, und wenn der Schlupfzustand erfasst wurde, ein "An"-Steuersignal als ein Drehmomentkorrektursteuersignal ausgibt, oder wenn kein Schlupfzustand erfasst wurde, ein "Aus"-Steuersignal als ein Drehmomentkorrektursteuersignal ausgibt,
eine Drehmomentsteuerungssignal-Recheneinheit (17), die in Reaktion auf das Drehmomentkorrektursteuersignal ein Drehmomentsteuersignal für die Motoren (1, 4) regelt, und
eine Drehmomentsteuereinheit (16), die das Motorabgabedrehmoment so steuert, dass es dem Drehmomentsteuerbefehl folgt.

4. Elektrisch betriebenes Fahrzeug nach Anspruch 3, wobei,
wenn die Raddrehgeschwindigkeiten der angetriebenen Räder (7, 8) kleiner sind als der erste Einstellwert oder die Fahrzeuggeschwindigkeit kleiner ist als der erste Einstellwert und die Raddrehgeschwindigkeiten der Antriebsräder (3, 6) größer als der zweite Einstellwert sind, der Schlupfzustandsdiskriminator erfasst, dass ein Schlupf auftritt.

5. Elektrisch betriebenes Fahrzeug nach Anspruch 3, wobei,
wenn die Raddrehgeschwindigkeiten der angetriebenen Räder (7, 8) oder die Fahrzeuggeschwindigkeit kleiner als der erste Einstellwert sind, und die Raddrehgeschwindigkeiten der Antriebsräder (3, 6) größer als der zweite Einstellwert sind, der Schlupfzustandsdiskriminator (18) erfasst, dass ein Schlupf auftritt, und
wenn der Schlupferfassungszustand für eine vordefinierte Zeitspanne anhält und die Raddrehgeschwindigkeiten der Antriebsräder (3, 6) größer als ein dritter Einstellwert sind, der Schlupfzustandsdiskriminator (18) ferner erfasst, dass ein Schlupf anhält.

6. Elektrisch betriebenes Fahrzeug nach Anspruch 3, wobei,
wenn das Drehmomentkorrektursteuersignal das "An"Steuersignal ist, die Drehmomentsteuerungs-Recheneinheit (17) stetig das Drehmomentsteuersignal für die Motoren (1, 4) verringert, und
wenn das Drehmomentkorrektursteuersignal das "Aus"-Steuersignal ist, die Drehmomentsteuerungs-Recheneinheit (17) stetig das Drehmomentsteuerungssignal für die Motoren (1, 4) erhöht.

7. Elektrisch betriebenes Fahrzeug nach Anspruch 6, wobei,
wenn das Drehmomentsteuersignal für die Motoren (1, 4) stetig verringert wurde, eine Änderungsrate des Drehmomentsteuersignals gemäß einer bestimmten Ladungsmenge des Fahrzeugs verändert wird, und
wenn die Ladungsmenge klein ist, die Änderungsrate in ihrer Größe wächst.

8. Elektrisch betriebenes Fahrzeug nach Anspruch 5, wobei
der dritte Einstellwert kleiner als der zweite Einstellwert und größer als der erste Einstellwert ist.

9. Elektrisch betriebenes Fahrzeug nach Anspruch 3, wobei,
wenn die Raddrehgeschwindigkeiten der angetriebenen Räder (7, 8) den ersten Einstellwert überschreiten, der Schlupfzustandsdiskriminator (18) ein Schlupfereignis in Übereinstimmung mit einem Rutschen der Antriebsräder (3, 6) erfasst, welches aus den Raddrehgeschwindigkeiten der angetriebenen Räder (7, 8) und der Antriebsräder (3, 6) berechnet wird.

10. Elektrisch betriebenes Fahrzeug nach Anspruch 9, wobei
der Schlupf eine Schlupfrate der Antriebsräder (3, 6) oder eine etwaige Differenz zwischen den Raddrehgeschwindigkeiten der Antriebsräder (3, 6) und den angetriebenen Rädern (7, 8) ist.

11. Elektrisch betriebenes Fahrzeug nach Anspruch 3, wobei,
wenn die Fahrzeuggeschwindigkeit den ersten Einstellwert überschreitet, der Schlupfzustandsdiskriminator (18) ein Schlupfereignis in Übereinstimmung mit einem Rutschen der Antriebsräder (3, 6) erfasst, das aus der Fahrzeuggeschwindigkeit und den Raddrehgeschwindigkeiten der Antriebsräder (3, 6) berechnet wird.

12. Elektrisch betriebenes Fahrzeug nach Anspruch 11, wobei
das Rutschen eine Schlupfrate der Antriebsräder (3, 6) oder eine etwaige Differenz zwischen den Raddrehgeschwindigkeiten der Antriebsräder (3, 6) und der Fahrzeuggeschwindigkeit ist.

## Revendications

1. Véhicule à entraînement électrique ayant des roues entraînées (7, 8) et des roues d'entraînement (3, 6), dans lequel les roues d'entraînement (3, 6) sont chacune entraînées par un moteur électrique (1, 4) spécifique, le véhicule comprenant en outre :
un moyen (22) de commande pour réguler un couple qui est délivré en sortie des moteurs (1, 4), afin que, des vitesses de roues des roues entraînées (7, 8) ou une vitesse de carrosserie du véhicule étant inférieure(s) à une première valeur de paramétrage, des vitesses de roues des roues d'entraînement (3, 6) soient inférieures à une deuxième valeur de paramétrage et **caractérisé en ce qu'**il régule le couple lorsque les vitesses de roues des roues entraînées ou la vitesse de carrosserie du véhicule excède(nt) la première valeur de paramétrage, un état de patinage des roues d'entraînement (3, 6) est discriminé par les vitesses de roues des roues d'entraînement (3, 6) et celles des roues entraînées (7, 8) ou par les vitesses de roues des roues d'entraînement (3, 6) et la vitesse de carrosserie du véhicule, et l'état de patinage étant détecté, le couple délivré en sortie du moteur (1, 4) est régulé pour éliminer l'état de patinage.

2. Véhicule à entraînement électrique selon la revendication 1, dans lequel :
la deuxième valeur de paramétrage est supérieure à la première valeur de paramétrage.

3. Véhicule à entraînement électrique selon la revendication 2, dans lequel, afin de réguler le couple de sortie de moteur de façon à ce que, lorsque les vitesses de roues des roues entraînées (7, 8) ou la vitesse de carrosserie du véhicule est/sont inférieure(s) à la première valeur de paramétrage, les vitesses de roues des roues d'entraînement (3, 6) soient inférieures à la deuxième valeur de paramétrage, le moyen de commande inclut :
un discriminateur (18) d'état de patinage lorsque les vitesses de roues des roues entraînées (7, 8) ou la vitesse de carrosserie du véhicule excède(nt) la première valeur de paramétrage, qui discrimine un état de patinage des roues d'entraînement (3, 6) par les vitesses de roues des roues d'entraînement (3, 6) et celles des roues entraînées (7, 8) ou par les vitesses de roues des roues d'entraînement (3, 6) et la vitesse de carrosserie du véhicule, et à la détection de l'état de patinage, délivre en sortie une commande d'activation comme une commande de correction de couple ou à la non détection de l'état de patinage, délivre en sortie une commande de désactivation comme une commande de correction de couple ;
une unité arithmétique (17) de commande de couple qui régule, en réponse à la commande de correction de couple, une commande de couple adressée aux moteurs (1,4) ; et
un contrôleur (16) de couple qui commande le couple de sortie de moteur pour obéir à la commande de couple.

4. Véhicule à entraînement électrique selon la revendication 3, dans lequel :
les vitesses de roues des roues entraînées (7, 8) étant inférieures à la première valeur de paramétrage ou que la vitesse de carrosserie du véhicule étant inférieure à la première valeur de paramétrage et vitesses de roues des roues d'entraînement (3, 6) étant supérieures à la deuxième valeur de paramétrage, le discriminateur d'état de patinage détecte qu'un patinage survient.

5. Véhicule à entraînement électrique selon la revendication 3, dans lequel :
les vitesses de roues des roues entraînées (7, 8) ou la vitesse de carrosserie du véhicule étant inférieure(s) à la première valeur de paramétrage et les vitesses de roues des roues d'entraînement (3, 6) étant supérieures à la deuxième valeur de paramétrage, le discriminateur (18) d'état de patinage détecte qu'un patinage survient ; et
l'état de détection de patinage persistant sur une durée prédéterminée et les vitesses de roues des roues d'entraînement (3, 6) étant supérieures à une troisième valeur de paramétrage, le discriminateur (18) d'état de patinage détecte en outre que le patinage continue.

6. Véhicule à entraînement électrique selon la revendication 3, dans lequel :
la commande de correction de couple étant la commande d'activation, l'unité arithmétique (17) de commande de couple décrémente de façon monotone la commande de couple adressée aux moteurs (1, 4) ; et
la commande de correction de couple étant la commande de désactivation, l'unité arithmétique (17) de commande de couple incrémente de façon monotone la commande de couple adressée aux moteurs (1, 4).

7. Véhicule à entraînement électrique selon la revendication 6, dans lequel :
la commande de couple adressée aux moteurs (1, 4) étant décrémentée de façon monotone, un taux de changement de la commande couple varie en fonction d'une quantité de charge particulière du véhicule ; et
la quantité de charge étant petite, le taux de changement augmente en grandeur.

8. Véhicule à entraînement électrique selon la revendication 5, dans lequel :
la troisième valeur de paramétrage est plus petite que la deuxième valeur de paramétrage et plus grande que la première valeur de paramétrage.

9. Véhicule à entraînement électrique selon la revendication 3, dans lequel:
les vitesses de roues des roues entraînées (7, 8) excédant la première valeur de paramétrage, le discriminateur (18) d'état de patinage détecte un événement de patinage en fonction d'un patinage des roues d'entraînement (3, 6), calculé à partir des vitesses de roues des roues entraînées (7, 8) et de celles des roues d'entraînement (3, 6).

10. Véhicule à entraînement électrique selon la revendication 9, dans lequel :
le patinage est un rapport de patinage des roues d'entraînement (3, 6) ou de quelconques différences entre les vitesses de roues des roues d'entraînement (3, 6) et celles des roues entraînées (7, 8).

11. Véhicule à entraînement électrique selon la revendication 3, dans lequel:
la vitesse de carrosserie du véhicule excédant la première valeur de paramétrage, le discriminateur (18) d'état de patinage détecte un événement de patinage en fonction d'un patinage des roues d'entraînement (3, 6), calculé à partir de la vitesse de carrosserie du véhicule et des vitesses de roues des roues d'entraînement (3, 6).

12. Véhicule à entraînement électrique selon la revendication 11, dans lequel :
le patinage est un rapport de patinage des roues d'entraînement (3, 6) ou de quelconques différences entre les vitesses de roues des roues d'entraînement (3, 6) et la vitesse de carrosserie du véhicule.
